(19) Europäisches Patentamt
European Patent Office
Office européen des brevets

(11) **EP 1 692 579 B1**

(12) **EUROPÄISCHE PATENTSCHRIFT**

(45) Veröffentlichungstag und Bekanntmachung des Hinweises auf die Patenterteilung:
**08.10.2008 Patentblatt 2008/41**

(21) Anmeldenummer: **04801207.4**

(22) Anmeldetag: **04.12.2004**

(51) Int Cl.:
***G05B 19/418*** (2006.01)

(86) Internationale Anmeldenummer:
**PCT/EP2004/013807**

(87) Internationale Veröffentlichungsnummer:
**WO 2005/059664 (30.06.2005 Gazette 2005/26)**

(54) **VERFAHREN UND VORRICHTUNG ZUM BETREIBEN ZUSAMMENARBEITENDER, UNTERSCHIEDLICHER GERÄTE**

METHOD AND DEVICE FOR OPERATING INTERACTING DIFFERENT UNITS

PROCEDE ET DISPOSITIF POUR FAIRE FONCTIONNER DIFFERENTS APPAREILS COUPLES

(84) Benannte Vertragsstaaten:
**AT BE BG CH CY CZ DE DK EE ES FI FR GB GR HU IE IS IT LI LT LU MC NL PL PT RO SE SI SK TR**

(30) Priorität: **09.12.2003 DE 10357824**

(43) Veröffentlichungstag der Anmeldung:
**23.08.2006 Patentblatt 2006/34**

(73) Patentinhaber: **KUKA Roboter GmbH**
**86165 Augsburg (DE)**

(72) Erfinder: **GMEINER, Peter**
**86753 Möttingen (DE)**

(74) Vertreter: **Lempert, Jost**
**Patentanwälte**
**Lichti, Lempert, Lasch, Lenz,**
**Postfach 41 07 60**
**76207 Karlsruhe (DE)**

(56) Entgegenhaltungen:
**EP-A- 0 431 180        EP-A- 0 507 955**
**EP-A- 1 052 560**

**Beschreibung**

Die Erfindung betrifft ein Verfahren und eine Vorrichtung zum Betreiben zusammenarbeitender, auch unterschiedlicher Geräte mit diese durch Steuerungsabläufe steuernden unterschiedlichen Steuerungen, insbesondere mit unterschiedlichen Steuerungstakten.

Komplexe Anlagen, die eine Vielzahl zusammenarbeitender, unterschiedlicher Geräte umfassen, werden heutzutage vorzugsweise unter Verwendung PC-basierter Steuerungslösungen hinsichtlich einer Steuerung von Bewegungen (im Folgenden auch als "Motionwelt" oder "Bewegungswelt" bezeichnet) gesteuert. Dabei kann es sich bei den gemeinsam zu steuernden Geräten einer derartigen Anlage beispielsweise um CNC-Systeme (CNC: Computer Numeric Control), RC-Systeme (RC: Robot Controller) und/oder PLC-Systeme (PLC: Programmable Logic Control; auch SPS: speicherprogrammierbare Steuerung) handeln, wobei PLC und SoftPLC-Systeme gleich zu behandeln sind (SoftPLC/ SoftSPS: eine softwaretechnisch ausgebildete PLC/SPS) .

Bei komplexen Anlagenkonzepten, wie z.B. in der Laser-Anlagentechnik, werden vielfältige Koordinierungsmöglichkeiten zwischen Robotern, Spann- und Halteeinrichtungen, Laser- und Liniensteuerungen benötigt. So werden beispielsweise die Geomatrie-Stationen bei führenden Automobilherstellern über ein internes Protokoll einer ASCII-Schnittstelle über externe Personalcomputer (PC) koordiniert, um ein gleiches Zeitverhalten der Roboterwelt (RC-Kern), der CNC-Spanntechnik sowie der Lasertechnik zu erreichen. Dabei ist es notwendig, dass einzelne Zeitverhalten der verschiedenen Motionwelten (RC, CNC, PLC) in einer speziell definierten ASCII-Datei über ein geeignetes Protokoll, wie TCP/IP, an einen Koordinations-PC zu schicken, der die genannten drei Bewegungswelten hinsichtlich ihres Zeitverhaltens korrigiert und über das ASCII-file wieder an die verschiedenen Steuerungen zurückschickt. Derartige Steuerungsverfahren bzw. -vorrichtungen sind hinsichtlich ihres Aufbaus bzw. Ablaufes komplex und dementsprechend unflexibel.

Es ist bekannt, eine Mehrzahl von Instanzen (CPUs) vorzusehen, von denen eine eine zentrale Instanz und die andere dezentrale Instanzen sind. Jede Instanz hat ihre eigene Einheit zur Taktgenerierung. Allerdings werden die Einheiten der dezentralen Instanzen durch einen Synchronisationstakt der zentralen Instanz synchronisiert, d.h. die dezentralen Instanzen können nicht ihre Funktionsabläufe entsprechend einem autonomen Takt unabhängig generieren, sondern der jeweils eigene Takt einer dezentralen Instanz wird durch die von der zentralen Instanz ausgehenden Synchronisation bestimmt bzw. die Taktung jeder dezentralen Instanz durch den Synchronisationstakt der zentralen Instanz gesteuert.

Damit wird der Verarbeitungstakt der einzelnen Steuerungsgeräte direkt durch das Synchronisationssignal der zentralen Einheit synchronisiert und bestimmt, so dass erstere nicht mehr mit unabhängiger Taktung arbeiten können.

Es ist bekannt in Synchronisationseinrichtungen Geräte mit Hilfe von Synchronisationssignalen, wie z.B. einem gemeinsamen Taktsignal, zur synchronen Zusammenarbeit zu zwingen, wie aus der EP 0 507 955 A1 und der EP 1 052 560 A1 bekannt ist.

Der Erfindung liegt zur Vermeidung der vorstehend genannten Nachteile die Aufgabe zugrunde, eine vereinfachte und flexiblere Koordination und Bewegungsplanung insbesondere bei komplexen Anlagen der eingangs genannten Art zu erreichen.

Diese Aufgabe wird bei einem Verfahren der eingangs genannten Art dadurch gelöst, dass die Werte oder Befehle der unterschiedlichen Steuerungen auf Zwischentakte eines gemeinsamen Systemtakts interpoliert werden und dass die Steuerungsabläufe in mindestens einer Synchronisationseinrichtung synchronisiert werden. Entsprechend weist eine Vorrichtung der eingangs genannten Art zur Lösung der Aufgabe mindestens eine gemeinsame Interpolationseinrichtung für die Steuerungen zum Interpolieren von Werten oder Befehlen der unterschiedlichen Steuerungen auf Zwischentakte eines gemeinsamen Systemtakts und mindestens eine Synchronisationseinrichtung zum Synchronisieren der Steuerungsabläufe auf.

Das Merkmal der Interpolation der Werte oder Befehle der Ausgangssteuerungen auf einen gemeinsamen Systemtakt beinhaltet, dass die von den einzelnen Ausgangssteuerungen in deren Takt berechneten Werte oder Befehle zu den durch den höheren Systemtakt gegebenen Zwischentaktzeiten bestimmt, also eben interpoliert werden. Die Werte oder Befehle, wie ansteuerbare Positionswerte, werden also zu den Zwischenzeittakten des Motionmanagers berechnet und damit auf diese interpoliert. Hierauf aufbauend erfolgt dann die Synchronisation. Die Befehle werden dann jeweils in dem Takt der einzelnen Funktioneinheit an diese zur Ausführung des Befehls weitergegeben.

Auf diese Weise ergibt sich erfindungsgemäß eine einfache Bedienbarkeit auch komplexer Anlagen, wie z.B. in der vorstehend erwähnten Lasertechnik, wo Roboterbewegungen mit PLC-Bewegungen (z.B. einer Liniensteuerung) und Spanntechniken als Einheit koordiniert werden müssen. Die im Rahmen der Erfindung vorgesehene Koordinierungseinrichtung koordiniert das Zusammenspiel der einzelnen Achsen und Achshaufen. Unter Letzteren versteht man eine Gruppierung solcher Achsen, die über einen gemeinsamen Antriebstreiber, wie eine DPRAM-Schnittstelle (DPRAM: Dual-Port-Zufallszugriffsspeicher) getrieben werden, so dass alle in einem Achshaufen gebundenen Antriebe eine gleiche Konfiguration bezüglich Taktfrequenz und Protokoll besitzen.

In Weiterbildung des erfindungsgemäßen Verfahrens ist vorgesehen, dass Funktionseinheiten der Geräte nach erfolgter Synchronisierung nach einer weiteren Interpolation mit Steuersignalen versorgt werden. Es ist somit möglich, bestimmte Geräte der Anlage mit unterschiedlichen Takten zu betreiben, wenn dies beispielsweise aus Genauigkeits- und/ oder Regelungsgründen erforderlich sein sollte. In Weiterbildung der erfindungsgemäßen Vorrichtung weist diese daher zumindest eine weitere Interpolationseinrichtung zum Interpolieren von Steuersignalen für Funktionseinheiten der Geräte nach erfolgter Synchronisierung auf.

Weiterhin kann erfindungsgemäß vorgesehen sein, dass Achsen der Geräte koordiniert werden. Entsprechend weist eine bevorzugte Ausgestaltung der erfindungsgemäßen Vorrichtung eine Koordinationseinrichtung zum Koordinieren der Steuerungsabläufe auf.

Um eine Echtzeitsteuerung der Anlage bzw. der Geräte zu ermöglichen ist vorgesehen, dass die Koordination und/oder Synchronisation in Echtzeit durchgeführt wird. Zweckmäßig sind daher die Synchronisations- und/oder Koordinierungseinrichtung echtzeitfähig ausgebildet. Weiterhin kann zu Bedien- und Konfigurationszwecken eine nicht-echtzeitfähige Komponente zum Verändern von Einstellungen der Synchronisations- und/oder Koordinationseinrichtung vorgesehen sein.

Da beispielsweise von einer Robotersteuerung (RC) über deren Interpolator wesentlich mehr koordinatenbezogene und roboterspezifische Informationen an die Koordinierungseinrichtung übertragen werden müssen als beispielsweise über eine einfachere SoftPLC bzw. deren Interpolator, ist im Rahmen einer äußerst bevorzugten Ausgestaltung des erfindungsgemäßen Verfahrens vorgesehen, dass die unterschiedlichen Steuerungstakte $IPO_i$ der unterschiedlichen Steuerungen gemäß einer Beziehung

$$IPO_i = n_i \cdot t_{Tick}, \ n_i = 1,2,3,\ldots$$

gewählt werden, wobei $t_{Tick}$ ein ganzzahliges Vielfaches eines Taktes einer zur Durchführung des Verfahrens verwendeten Hardware ist. Ein solches Verfahren erlaubt verschiedene Regelalgorithmen für die verschiedenen Anwendungsfälle, wie Robotersteuerung, SoftPLC (Verpackungsindustrie oder Anlagentechnik) oder CNC-Anwendungen. Dabei erfolgt die erfindungsgemäße Interpolation auf einen gemeinsamen Systemtakt vorzugsweise in einer gemeinsamen Interpolationseinrichtung für alle Steuerungen. Im Rahmen einer äußerst bevorzugten Weiterbildung der erfindungsgemäßen Vorrichtung ist die gemeinsame Interpolationseinrichtung entsprechend zum Interpolieren von Steuerungstakten der Form $IPO_i = n_i \cdot t_{Tick}$ mit $n_i = 1,2,3, \ldots$ ausgebildet, wobei $t_{Tick}$ ein ganzzahliges Vielfaches eines Taktes einer verwendeten Hardware ist.

In bevorzugter Weiterbildung des erfindungsgemäßen Verfahrens wird der Koordinierungseinrichtung durch die Funktionseinheiten ein veränderter Systemtakt vorgeschlagen. Es ist auf diese Weise möglich, spezielle Regelverfahren, wie z.B. eine Stromregelung durchzuführen, die aufgrund einer erforderlichen Genauigkeit oder dergleichen ein kürzeres Taktsignal benötigen. Zweckmäßigerweise kann dabei die Koordinierungseinrichtung den vorgeschlagenen, veränderten Systemtakt ablehnen oder annehmen. Letzterer Fall wird insbesondere dann auftreten, wenn eine Belastung des Gesamtsystems durch den neuen Systemtakt tatsächlich verkraftbar ist: Je höher die Taktfrequenz, desto öfter müssen Regelschleifen im (Echtzeit-)Betriebssystem berechnet werden. In Weiterbildung kann vorgesehen sein, dass eine Anzahl von Funktionseinheiten nach erfolgter Taktänderung nach dem alten Systemtakt weiterbetrieben werden. Um dies zu ermöglichen, gilt für den veränderten Systemtakt zweckmäßiger Weise

$$t_{Tick}' = 1/n' \cdot t_{Tick}, \ n' = 1,2,3,\ldots.$$

Dementsprechend ist erfindungsgemäß die Synchronisations-und/oder Koordinierungseinrichtung vorzugsweise zum Verändern des Systemtaktes ausgebildet, wobei für den veränderten Systemtakt gilt: $t_{Tick}' = {}'1/n' \cdot t_{Tick}$, um so auf Anfrage durch wenigstens eine Funktionseinheit auch ein kürzeres Taktsignal verwenden zu können. In diesem Zusammenhang weist die Synchronisations- und/oder Koordinierungseinrichtung in Weiterbildung der erfindungsgemäßen Vorrichtung eine Bestimmungseinrichtung zum Bestimmen einer Belastung des Systems auf, deren Ergebnisse für die Veränderungen des Systemtakts maßgeblich ist. Auf diese Weise sind erfindungsgemäß nur solche Takteinstellungen für das Gesamtsystem erlaubt, die durch dieses, insbesondere durch dessen echtzeitfähige Bestandteile, auch tatsächlich verkraftet wird.

Mittels des erfindungsgemäßen Verfahrens werden vorzugsweise jeweils eine Mehrzahl von Geräten eines bestimmten Gerätetyps betrieben.

Im Rahmen einer einfachen und flexiblen Ausgestaltung und Einsetzbarkeit der erfindungsgemäßen Vorrichtung kann weiterhin vorgesehen sein, dass zumindest die Synchronisations- und/oder Koordinierungseinrichtung und eine Anzahl von Steuerungen als auf einer gemeinsamen Rechnereinheit ausführbare Programmeinrichtungen ausgebildet sind. Dabei kann insbesondere vorgesehen sein, dass zum Zwecke einer verbesserten Anpassbarkeit eine Anlage weitere Geräte während des Betriebs anschließbar sind.

Weitere Eigenschaften und Vorteile der Erfindung ergeben sich aus der nachfolgenden Beschreibung eines Ausführungsbeispiels anhand der Zeichnung. Es zeigt:

Fig. 1 eine schematische Gesamtdarstellung einer erfindungsgemäßen Vorrichtung;

Fig. 2 eine detailliertere Darstellung insbesondere eines echtzeitfähigen Bestandteils der erfindungsgemäßen Vorrichtung gemäß der Fig. 1; und

Fig. 3a, 3b eine Veranschaulichung des erfindungsgemäßen Zwischeninterpolations-Verfahrens bzw. der Arbeit der Interpolationseinrichtungen des Motionmanagers; und

Fig. 4 eine detailliertere Darstellung einer erfindungsgemäßen Vorrichtung gemäß der Fig. 1 und 2.

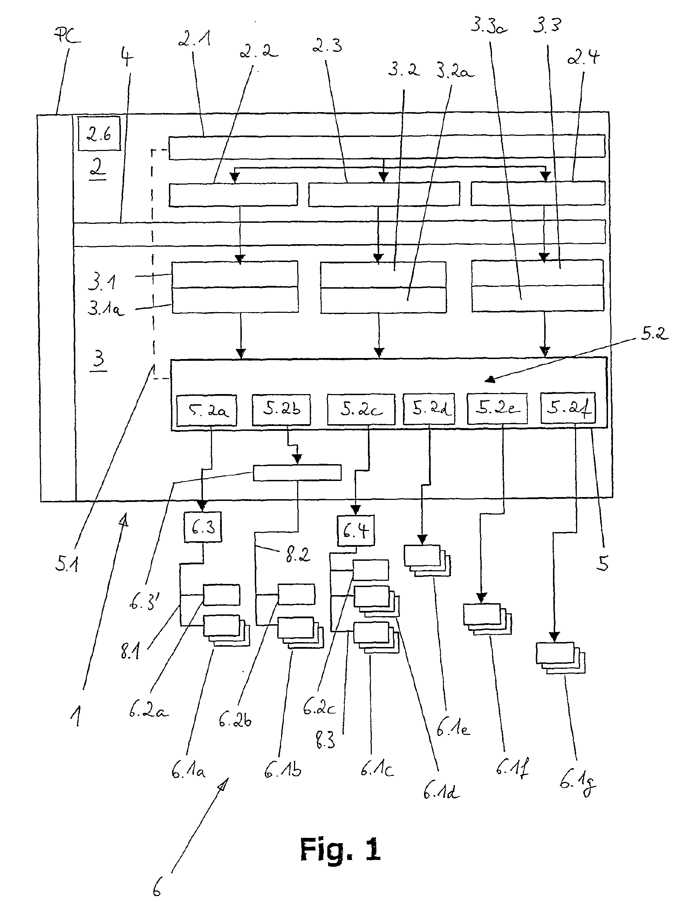

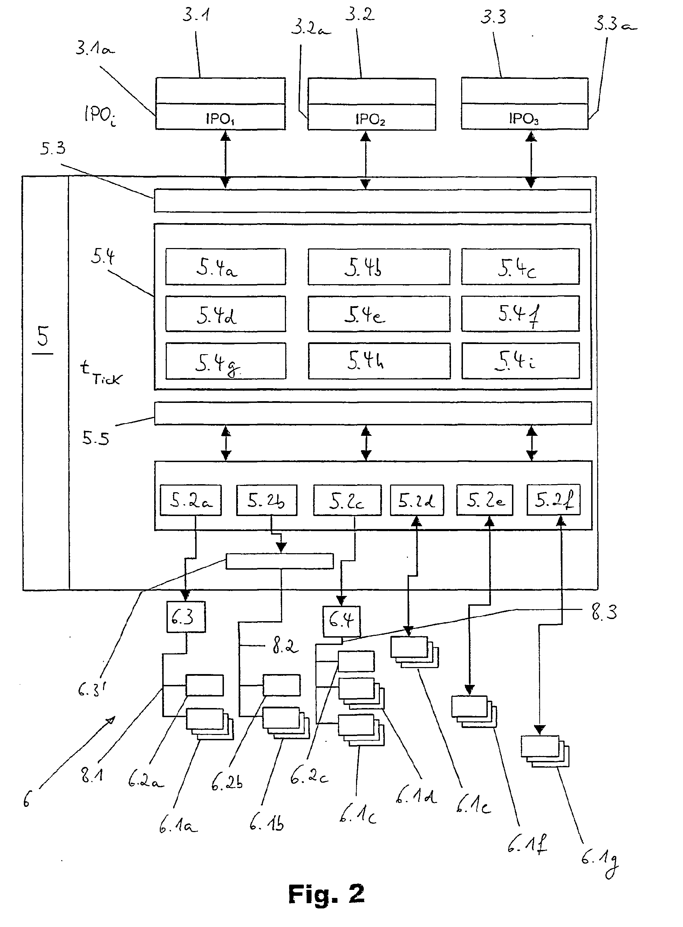

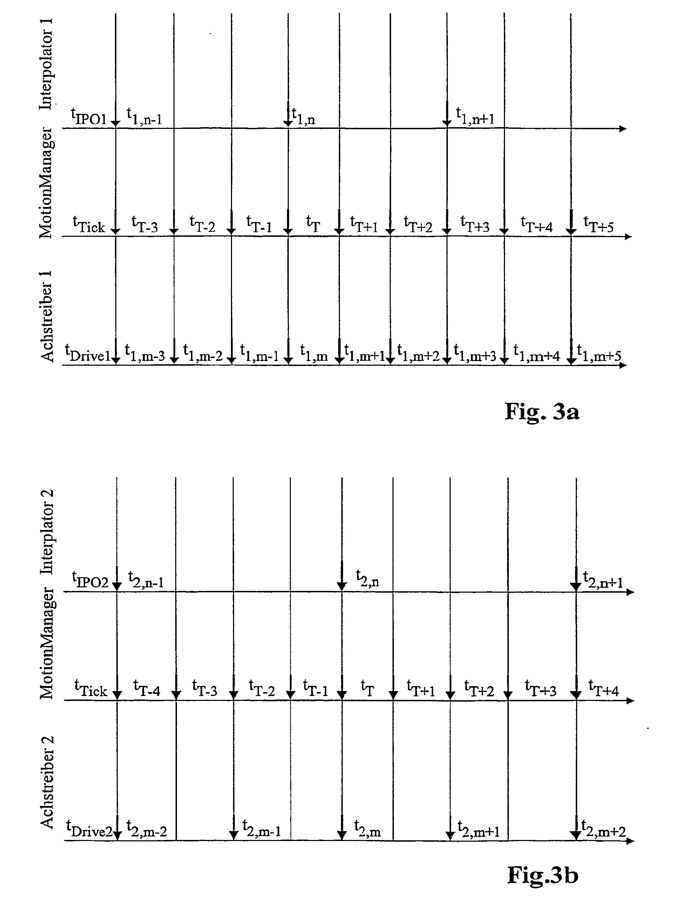

Die Fig. 1 zeigt die Gesamtarchitektur einer multifunktionalen PC-Steuerungsvorrichtung 1 für komplexe Anlagen mit einer Vielzahl zusammenarbeitender unterschiedlicher Geräte, wie Industrierobotern, Spannvorrichtungen, Laser-Schneidwerkzeugen, einer Förderlinie oder dergleichen (hier nicht dargestellt); Datenübertragungen im Zuge von Steuerungsabläufe sind hier - wie auch in den folgenden Fig. 2 und 3 - als Doppelpfeile dargestellt.

Die gesamte erfindungsgemäße Vorrichtung 1 ist in Form eines in geeigneter Weise programmtechnisch eingerichteten Personalcomputers PC ausgebildet, wie durch den vertikalen Balken links symbolisiert wird. Der PC weist zu Bedienungszwecken ein nicht-echtzeitfähiges Betriebssystem 2, wie Windows, und zu Steuerungszwecken ein echtzeitfähiges Betriebssystem 3, wie VxWorks, auf. Eine Kommunikation zwischen dem nicht echtzeitfähigen Betriebssystems 2 und dem echtzeitfähigen Betriebssystem 3 wird mittels eines geeigneten Protokolls, wie eines TCP/IP-Protokolls 4, gewährleistet.

Auf der Ebene des nicht-echtzeitfähigen Betriebssystems 2 ist die PC-Steuerung zum Ausführen programmtechnisch eingerichteter Bedienprogramme, wie Entwicklungs- und Diagnose-Werkzeugen 2.1, ausgebildet. Bei diesen kann es sich beispielsweise um Programmierwerkzeuge handeln, mit denen sich - wie in der Fig. 1 anhand vertikaler Pfeile angedeutet - auf eine Mensch-Maschine-Schnittstelle 2.2 (Human Machine Interface HMI), einen SPS-Code 2.3, d.h. ein Steuerungsprogramm für eine ggf. softwaretechnisch ausgebildete PLC und einen G-Code 2.4, d.h. ein CNC-Steuerprogramm eingewirkt werden kann. Weiterhin weist sie eine Bestimmungseinrichtung 2.6 zum Bestimmen einer Auslastung ihrer Rechnerkapazitäten auf.

Im echtzeitfähigen Teil 3 der erfindungsgemäßen Vorrichtung 1 weist diese gemäß der Ausgestaltung der Fig. 1 eine Robotersteuerung RC 3.1, eine speicherprogrammierbare Steuerung PLC, SPS 3.2 mit sogenannten MCF-Blöcken (Motion Control Function Blocks) sowie eine CNC-Einrichtung 3.3 (Computer Numeric Control) auf. Letztere sind softwaretechnisch als auf dem PC ablaufende Programme ausgebildet und beinhalten jeweils eine Interpolationseinrichtung 3.1a, 3.2a, 3.3a, nach deren Taktvorgabe die jeweilige Steuerung 3.1, 3.2, 3.3 das speziell für sie geeignete (Bewegungs-)Programm 2.2, 2.3, 2.4 abarbeitet.

Zur Weiterverarbeitung der von der Interpolationseinrichtung 3.1a, 3.2a, 3.3a gelieferten Interpolationsdaten weist die erfindungsgemäße Vorrichtung 1 in ihrem Echtzeitbereich 3 weiterhin eine als "Motionmanager" bezeichnete Programmeinrichtung 5 auf. Der Motionmanager 5 besitzt eine nicht-echtzeitfähige Konfigurationseinrichtung, die in der Ausgestaltung gemäß der Fig. 1 nicht explizit dargestellt sondern mittels einer (gestrichelten) Verbindung 5.1 vom Motionmanager 5 zu dem bereits erwähnten, auf der Nicht-Echtzeit-Ebene 2 des PC befindlichen Bedienungseinrichtung 2.1 dargestellt ist. Der Motionmanager 5 stellt den zentralen Bestandteil der erfindungsgemäßen Vorrichtung 1 dar und wird nachfolgend anhand der Fig. 2 und 3 noch detailliert erläutert.

Der Motionmanager 5 besitzt weiterhin eine Bewegungs-Treiberschicht 5.2, z.B. eine DPRAM-Schnittstelle, mit Treibern 5.2a-5.2f zur Informationsübertragung an Funktionseinheiten 6 der Anlage, wie Antriebe 6.1a-6.1g, Stromquellen 6.2a-6.2c oder dergleichen. Bei den Treibern 5.2a-5.2f kann es sich um DPRAM-Treiber, Ethernet-Treiber, PowerLink-Treiber, Sercos-Treiber, Ethercat-Treiber oder dergleichen handeln. Die Informationsübermittlung an die genannten Funktionseinheiten 6 der Anlage erfolgt über eine Anzahl von (Antriebs-)Bussen 8.1, 8.2, 8.3. Letztere umfassen zusätzlich noch weitere Elemente, wie Elemente zur digitalen Signalübertragung (DSE: Digital Signal Electronic) 6.3 oder weitere Echtzeit-Elemente (HRB: Hard Realtime Board) 6.4. Diese weiteren Elemente 6.3, 6.4 müssen nicht als eigenständige Hardware-Komponenten im Antriebsbus angeordnet sondern können auch als programmtechnische Einrichtungen innerhalb der PC-Steuerung vorhanden sein, wie beispielhaft anhand einer weiteren DSE 6.3' gezeigt.

Der Motionmanager 5 dient erfindungsgemäß dazu, die verschiedenen Steuerungen und Antriebe miteinander zu verbinden und deren Bewegungen zu koordinieren und zu synchronisieren, fungiert also im Rahmen der vorliegenden Erfindung als Synchronisations- und Koordinationseinrichtung. Für einen koordinierten Ablauf ist es erforderlich, die von den Steuerungen 3.1, 3.2, 3.3 kommenden Interpolationstakte IPO$_i$ in einen Systemtakt des Motionmanagers 5 zu überführen und über eine weitere Zwischeninterpolation die Antriebsbusse im richtigen Takt mit den Informationen für die Antriebe 6.1a-g zu versorgen. Die hierzu erforderliche konkrete Ausgestaltung des Motionmanagers 5 zeigt die Fig. 2.

Die Fig. 2 zeigt detailliert den Aufbau eines Motionmanagers 5 gemäß der Fig. 1. Oben in Fig. 2 sind nochmals die bereits in der Fig. 1 gezeigten Maschinensteuerungen, nämlich die Robotersteuerung 2.2, die speicherprogrammierbare Steuerung (SPS/PLC) 2.3 sowie die CNC-Steuerung 2.4 dargestellt. Jede dieser Steuerungen liefert Daten bei einem ihr eigenen Interpolations-Takt IPO$_i$, hier speziell den Interpolationstakten IPO$_1$, IPO$_2$, IPO$_3$. Der Motionmanager 5 weist nun zunächst eine als obere Zwischeninterpolationsschicht 5.3 bezeichnete gemeinsame Interpolationseinrichtung für die IPO-Takte IPO$_i$ auf, in der die Takte der unterschiedlichen Steuerungen 2.2-2.4 auf einen gemeinsamen Systemtakt $t_{Tick}$ interpoliert werden. Dabei gilt für die Interpolatoren 3.1a, 3.2a, 3.3a oberhalb des Motionmanagers 5: IPO$_i$ = n$_i$ · $t_{Tick}$, mit n$_i$ = 1, 2, 3, ..., d. h. diese Interpolatoren laufen mit einer größeren, vielfachen Zeiteinheit bezogen auf den Systemtakt $t_{Tick}$ des Motionmanagers 5. Weiterhin gilt für den Systemtakt $t_{Tick}$ des Motionmanagers 5: $t_{Tick}$ = n RTACC, wobei RTACC einen Quarztakt der Systemuhr angibt, der heute in der Regel 125 μs für einen 8 kHz-Quarz beträgt, wobei wiederum n = 1,2,3,.... Der konkrete Wert für RTACC wird also direkt durch die verwendete Hardware vorgegeben.

An die obere Zwischeninterpolationsschicht 5.3 schließt sich der eigentliche Kern 5.4 des Motionmanagers 5 an, der zur Durchführung bestimmter Aufgaben, wie Zustandsverwaltung, zyklische Überwachung, Messen, Diagnose, Initialisierung, Parametrisierung, Bewegung, zur Verwaltung von Tasks und Takten sowie zum Verwalten einer Konfigurations-Datenbank ausgebildet ist (Bezugszeichen 5.4a-i). Weiterhin weist der Motionmanager 5 eine als untere Zwischeninterpolationsschicht 5.5 bezeichnete Interpolationseinrichtung auf, die zum Verändern zeitrelevanter Aufgaben nach bestimmten Zeiteinteilungs-Tabellen (Timescheduling-Tabellen) ausgebildet ist. Die Timeschedulding-Tabellen werden benötigt, um Tasks mit höherer Priorität, die längere Berechnungen erfordern, als ihnen die Zeitscheibe, z.B. eine Taktperiode, zur Verfügung stellt, über mehrere Zeitscheiben zu verlängern. Tasks niederer Priorität werden unterbrochen bzw. verschoben, um die Tasks mit hoher Priorität zu Ende zu bearbeiten. Diese Timeschedulding-Mechanismen müssen so konfiguriert werden, dass das echtzeitfähige Runtime-System sicher läuft und die Steuerungsmechanismen immer prioritätsgesteuert ablaufen können. Dabei soll es keine Rolle spielen, in welchem Takt (erfindungsgemäß ein Vielfaches des Systemtakts) ein bestimmter Interpolator läuft.

Die in der Fig. 1 angedeutete Konfigurationseinrichtung 2.1 (mit Verbindung 5.1; s.o.) schlägt dabei einen Interpolationstakt für jeden in der unteren Zwischeninterpolationsschicht 5.5 enthaltenen achsrelevanten Interpolator vor. Die achsrelevanten Interpolatoren sind in der Fig. 2 nicht explizit dargestellt. Es handelt sich dabei um Interpolationseinrichtungen in der unteren Zwischeninterpolationsschicht 5.5, die gezielt Informationen bei bestimmten angepassten Takten an bestimmte Funktionseinheiten 6, wie beispielsweise einen Antrieb, liefern (vergleiche Fig. 1). An die untere Zwischeninterpolationsschicht 5.5 schließt sich die bereits anhand der Fig. 1 beschriebene DPRAM-Antriebsschnittstelle 5.2 mit den entsprechenden Treibern 5.2a-f für die Anlagen-Busse 8.1-8.3 an, wie ebenfalls bereits anhand der Fig. 1 detailliert beschrieben wurde.

Erfindungsgemäß kann das Einstellen des IPO-Taktes für den jeweiligen achsrelevanten Interpolator und die dafür notwendige Zwischeninterpolation in der unteren Zwischeninterpolationsschicht 5.5 entweder manuell oder automatisch angenommen (bestätigt) werden. Weiterhin ist es möglich, dass einer der Antriebsbusse 8.1-8.3 bzw. die entsprechenden Funktionseinheiten dem Motionmanager 5 eine kürzere Systemtaktzeit $t_{Tick}$ vorschlägt. Dies ist beispielsweise dann der Fall, wenn spezielle Regelverfahren, wie z.B. eine (PC-)Stromregelung, mit der beschriebenen PC-Steuerung über einen bestimmten Antrieb gefahren werden sollen. Bringt ein Antriebsbus ein kürzeres Taktsignal als den Systemtakt $t_{Tick}$ mit, so "meldet sich" die entsprechende Antriebsachse beim Konfigurator 2.1, 5.1 (vergleiche Fig. 1) des Motionmanagers 5 mit der Nachfrage um Übernahme des kürzeren Systemtaktes, der im Folgenden als $t_{Tick}'$ bezeichnet wird. Der Konfigurator kann dann mittels der Bestimmungseinrichtung 2.6 (Fig. 1) eine Belastung des Gesamtsystems bestimmen und entsprechend einen neuen Systemtakt $t_{Tick}'$ vorschlagen, für den jedoch gilt: $t_{Tick}'$ - 1/n' · $t_{Tick}$. Dabei können einige Interpolatoren mit Hilfe der Zwischeninterpolationsschicht 5.5 nach dem bisherigen IPO-Takt $t_{Tick}$ weitergefahren werden, wenn hier eine Notwendigkeit für eine verbesserte Regelschleife nicht gegeben ist. Auf diese Weise ist es im Einzelfall möglich, CPU-Ressourcen für die notwendigerweise kürzer getakteten Regelschleifen freizugeben. Die angegebenen Einstellungen für die Interpolatoren nach der Regel n · $t_{Tick}$ bzw. 1/n' · $t_{Tick}$ sind deshalb notwendig, da im Rahmen einer effektiven Umsetzung der Erfindung jeweils nur eine einzige Zwischeninterpolationsschicht 5.3, 5.5 sinnvoll ist und alle vorhandenen Interpolatoren diese Zwischeninterpolationsschicht verwenden, wobei es möglich sein soll, die verschiedenen Interpolatoren der unterschiedlichen vorhandenen Geräte gleichzeitig aber mit unterschiedlichen Takten zu fahren, da beispielsweise ein RC-Interpolator wesentlich mehr kartesische und roboterspezifische Informationen pro Zeiteinheit übermitteln muss, als beispielsweise der Interpolator einer einfacheren SoftSPS.

Die Fig. 3a und 3b zeigen beispielhaft das erfindungsgemäße Zwischeninterpolationsverfahren bzw. die Funktion der Zwischeninterpolationsschichten 5.3 des Motionmanagers 5 der Fig. 2.

In der Fig. 3a ist beispielsweise zunächst der IPO-Takt $t_{IPO1}$ des Interpolators 1 dargestellt, der beispielsweise dem Interpolator 3.1a der Steuerung 3.1 entspricht, während in der Fig. 3b der IPO-Takt $t_{IPO2}$ eines Interpolators 2 dargestellt ist, der beispielsweise dem Interpolator 3.2a der Steuerung 3.2 entspricht.

In der Mitte der beiden Fig. 3a, 3b ist jeweils der Takt $t_{Tick}$ des Motionmanagers dargestellt, der für beide Fig. 3a, 3b übereinstimmt. Der Takt des Motionmanagers $t_{Tick}$ ist jeweils ein Vielfaches der Interpolatortakte $t_{IPO}$, und zwar in den konkreten Ausführungsführungsbeispielen das Dreifache des Takts $t_{IPO1}$ des Interpolators 1 und das Vierfache des Takts $t_{IPO2}$ des Interpolators 2. In jeweils der letzten Zeile der Fig. 3a ist jeweils der Takt der Achstreiber 1 und 2 dargestellt, wobei der Achstreiber 1 der Fig. 3a dem Achstreiber 5.2a der Fig. 1, 2 und der Achstreiber 2 der Fig. 3b beispielsweise dem Achstreiber 5.2c der Fig. 1, 2 entsprechen mag.

Bei der Fig. 3a entspricht der Treibertakt $t_{Drive1}$ des Achstreibers 1 dem Takt $t_{Tick}$ des Motionmanagers, während bei der Fig. 3b der Treibertakt $T_{Drive2}$ des Achstreibers 2 halb so groß ist wie der Motionsmanager-Takt $t_{Tick}$ (also die Abstände zwischen Taktsignalen doppelt so lang sind).

Das erfindungsgemäße Verfahren ist nun derart: Der Interpolator 1 gibt in seinem Takt $t_{IPO1}$, berechnete Befehle oder Werte an den Motionmanager weiter. Dieser übernimmt die vom Interpolator 1 übergebenen Werte oder Befehle zu seinen $t_{Tick}$-Zeiten ... , $t_{T-3i}$ ..., $t_{T-3}$, $t_T$, $t_{T+3}$, ..., $t_{T+3i}$, ..., wobei i = 1, 2, 3 ..., während er zu seinen gegenüber dem IPO-Takt $t_{IPO1}$ des Interpolators 1 gegebenen Zwischenzeiten ..., $t_{T-3n-2}$, $t_{T-3n-1}$, ... , $t_{T-2}$, $t_{T-1}$, $t_{T+1}$, $t_{T+2}$, $t_{T+4}$, $t_{T+5}$, ...., $t_{T+3n+1}$, $t_{T+3n+2}$, ..., auf diese seine Zwischentaktwerte eine Interpolation der übergebenen Werte oder Befehle vornimmt, d.h. diese für die genannten Taktzeiten neu berechnet und, bei der Ausgestaltung der Fig. 3a mit seinem Takt, d.h. auch zu seinen Taktzeiten und mit dem identischen Takt des $t_{Drive1}$ des Achstreibers 1 und damit den identischen Taktzeiten an den Achstreiber 1 übergibt, der damit die entsprechende Funktionseinheit steuert (Fig. 1, 2).

Entsprechendes gilt für die vom Interpolator 2 abgegebenen Steuerungsbefehle oder -werte, wobei hier der Motionmanager diese nicht mit seinem Takt $t_{Tick}$ übergibt (indem sie interpoliert und damit neu berechnet werden), sondern mit dem halben Takt entsprechend dem Takt $T_{Drive2}$ des Achstreibers 2 und damit beispielsweise zu Zeiten $t_{T-4} = t_{2,m-2}$, $t_{T-2}$ $t_{2,m-1}$, $t_T = t_{2,m}$, t+2 = $t_{2,m+1}$, $t_{T+4} = t_{2,m+2}$, ...

Sowohl die Vervielfachung vom Interpolatortakt zum Motionmanagertakt als auch die Teilung zum Achstreibertakt kann jeweils beliebig sein, wobei der Motionmanagertakt $t_{Tick}$ jeweils der höchste Takt und ein Vielfaches sämtlicher anderer Takte ist.

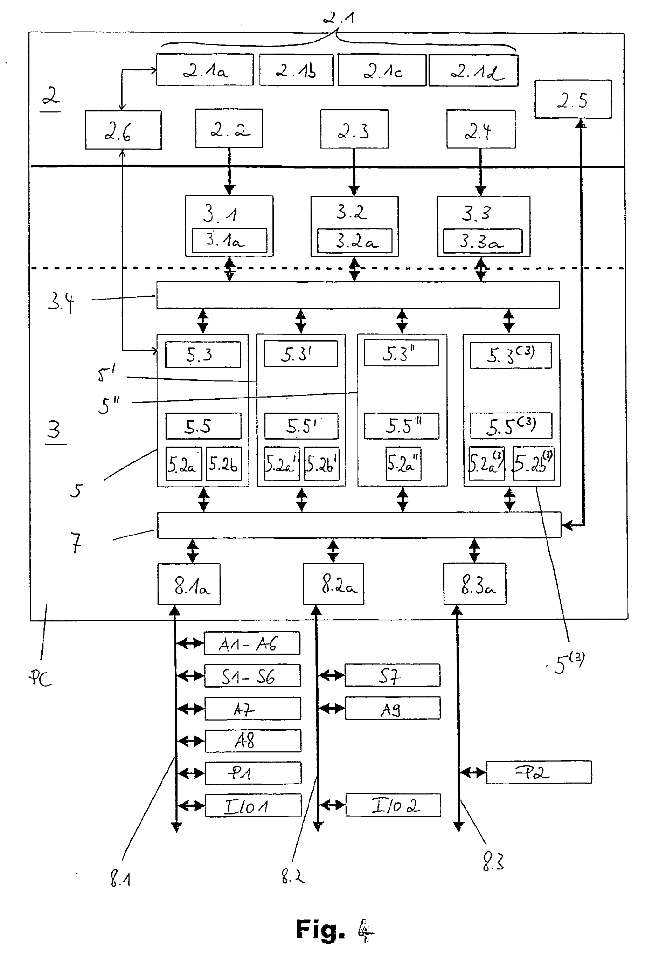

Die Fig. 4 zeigt detailliert die Steuerungsarchitektur einer PC-Steuerung zum Steuern einer komplexen Anlage mit wiederum einem nicht-echtzeitfähigen 2 und einem echtzeitfähigen Teil 3, die mehrere voneinander unabhängige Maschinensteuerungen 3.1, 3.2, 3.3 verwalten und über verschiedene Treiber und Bussysteme eine Vielzahl unterschiedlicher Funktionseinheiten, wie Antriebe, Sensoren, Ein- und Ausgabevorrichtungen und Peripheriegeräte ansprechen kann.

Die bereits in der Fig. 1 gezeigten Bedienungseinrichtungen 2.1 sind in der Darstellung der Fig. 2 detailliert in Programmierwerkzeuge 2.1a, Diagnosewerkzeuge 2.1b, Steuerungssoftware 2.1c sowie Mensch-Maschine-Schnittstellen (HMIs) zu Steuerungszwecken 2.1d aufgeschlüsselt. Weiterhin umfasst der nicht-echtzeitfähige Teil 2 der PC-Steuerung einen Treiber 2.5, beispielsweise ein Windows-Treiber, dessen Funktion weiter unten erläutert wird. Über einen Programmdaten-Router 3.4 gelangen die in den Interpolationseinrichtungen 3.1a, 3.2a, 3.3a der Maschinensteuerungen 3.1, 3.2, 3.3 erzeugten Programmdaten zu dem vorstehend detailliert erläuterten Motionmanager 5 bzw. weiteren, entsprechend ausgestalteten Managereinrichtungen für Sensoren (Sensormanager 5'), Ein- und Ausgabeeinrichtungen (I/O-Manager 5'') und zusätzliche Peripheriegeräte (Peripheriemanager $5^{(3)}$). Diese liefern entsprechende Treiberinformationen über einen Busdaten-Router 7 an eine Anzahl von Bussen 8.1, 8.2, 8.3, die jeweils einen eigenen Treiber 8.1a, 8.2a, 8.3a aufweisen. An die Busse 8.1-8.3 sind - wie bereits erwähnt - Funktionseinheiten 6 der zu steuernden Anlage angeschlossen (vergleiche Bezugszeichen 6.1x, 6.2x in Fig. 1 und 2), beispielsweise Antriebe A1 bis A6, Sensoren S1 bis S6, Antrieb A7, Antrieb A8, Peripheriegeräte P1, Ein- und Ausgabeeinrichtungen I/O1, Sensor S7, Antrieb A9, Ein- und Ausgabeeinrichtungen I/O2 sowie Peripheriegeräte P2. Als Peripheriegeräte sind z.B. Spiegelmotoren für Galvos (zum Ablenken von Lasereinheiten) oder kleine, schnelle Antriebsachsen zu nennen. Es können auch schnelle Eingänge über einen schnellen Echtzeittreiber realisiert werden, der z.B. Positionen auf einer Achse puffert, die nicht im gleichen Antriebsstrang liegen. Die Managereinrichtungen 5, 5', 5'', $5^{(3)}$ beinhalten entsprechende Treiber 5.2a, 5.2b, 5.2a', 5.2b', 5.2a'', $5.2a^{(3)}$, $5.2b^{(3)}$ . Der Treiber 2.5 dient zur Steuerung des Busdaten-Routers 7. Weiterhin übernimmt der Treiber 2.5 die Meldungsbereitstellung der Daten aus der Schnittstelle unter den Interpolatoren. Die Interpolatoren melden ihre Echtzeit-Diagnosedaten über die entsprechende Steuerung an die nicht-echtzeitfähige Umgebung, beispielsweise eine Windows-Umgebung. Die Antriebsdaten der Achsen werden direkt über den Windows-Treiber 2.5 der Windows-Ebene 2 zu Diagnosezwecken bereitgestellt. D.h. alle Daten aus dem Antriebsstrang, die nicht-echtzeitfähig in der Windows-Welt abfragbar sind, werden über diese "Meldungsschnittstelle" zur Verfügung gestellt.

Unter Verwendung der erfindungsgemäßen Vorrichtung bzw. des erfindungsgemäßen Verfahrens besteht somit in einfacher und effizienter Weise die Möglichkeit, z.B. drei Achsen eines Sechsachs-Industrieroboters (RC) über die in den Fig. 1 und 2 gezeigten DSE-Treiber, weitere zwei Roboterachsen über einen Ethernet-Treiber und die sechste Roboterachse über Ethercat (Ethernet for Controll Automation Technology) zu betreiben. Weiterhin ist es auf diese Weise möglich, parallel zur beschriebenen RC-Welt auch die CNC-Welt mit zugeordneten Achsen 1 bis 20 synchroner oder asynchroner Servomotoren über Sercos-Treiber und Achsen 21 bis 24 über den Ethernet-Treiber anzusteuern. Zusätzlich kann die (Soft-) SPS zugeordnete Achsen 1 bis 8 über den DSE-Treiber und weitere Achsen 9 bis 12 über Sercos-Treiber ansteuern. Eine solche Konfiguration muss vor der erstmaligen Verwendung manuell über den Motionmanager 5 konfiguriert werden, beispielsweise unter Verwendung der dargestellten Bedienungseinrichtung 2.1, 5.1.

Die weiterhin oben genannten Aufgaben des Motionmanagers 5 sind wie folgt charakterisiert:

a) Initialisierung
Der Motionmanager 5 kann als Steuerungsbasis betrachtet werden. Bei seinem Bootvorgang werden die zentralen Systemdienste und Einstellungen initialisiert.

b) Kleinster Grundtakt (Tick)
Der Systemgrundtakt (in µs) wird über den Motionmanager 5 konfiguriert. Die Taktquelle kann ein externer Interupt (z.B. SERCOS-Karte) sein. Alle anderen Takte im System müssen ganzzahlige Vielfache des Systemgrundtaktes, $t_{Tick}$, sein.

c) Konfigurations-Datenbank
Der Motionmanager 5 lädt zuerst sämtliche konfigurierten Achstreiber. Anschließend legt jeder Achstreiber für seine konfigurierten Achsen Achsobjekte an. Nach den Achstreibern lädt der Motionmanager 5 die Interpolatoren in der unteren Zwischeninterpolationsschicht 5.5 und initialisiert diese. Die Zuordnung der Achsen zu den Interpolatoren kann erstmalig bei deren Initialisierung stattfinden und zur Laufzeit umkonfiguriert werden.

d) Zyklische Überwachung
Der Motionmanager 5 synchronisiert den Hochlauf der verschiedenen Module (Achstreiber/Interpolatoren) über eine State-Machine und überwacht die Interpolatoren zyklisch.

e) Parametisierung
Der Motionmanager 5 ordnet logische Achsen einem Interpolator zu. Für Achsverbände (gekoppelte Achsen) kann konfiguriert werden, dass diese Achsen nur im Verbund einem Interpolator zugeordnet werden können.

f) Diagnosefunktionen (Trace)
Die Achstreiber erhalten eine Schnittstelle, über die eine Trace-Konfiguration eingelesen werden, ein Trace gestartet, gestoppt oder getriggert werden kann. Die Konfiguration und die Datenspeicherung sind achstreiberspezifisch. Ein synchrones Tracen über mehrere Achstreiber ist nicht möglich.

g) Messen
Die Funktionalität schnelles Messen, Conveyor (antriebslose Achse) und sog. Touchsense müssen in einer separaten Funktionalität mit den Interpolatoren synchronisiert werden.

h) Zustandsverwaltung
Der Motionmanager 5 verwaltet die Zustände der Bremsen und Reglerfreigaben. Dazu müssen die Interpolatoren Aufträge zur Regler- und Bremsenfreigabe absetzen. Der Motionmanager sorgt für eine Konsistenzprüfung. Achsen, die am gleichen Bremskanal hängen, werden gegebenenfalls vom Motionmanager 5 auf "in Regelung" gesetzt.

i) Bewegung
Folgende Bewegungsarten sind zu synchronisieren:

zyklische Daten (Soll-Werte)

- Position
- Geschwindigkeitsvorsteuerung
- Momentenvorsteuerung

zyklische Daten (Ist-Werte)

- Position
- Geschwindigkeit
- Strom (Moment)

nicht zyklische Daten

- Reglerfreigabe
- Bremsenfreigabe
- Parametersatz-Auswahl
- Überwachungsgrenzen.

Mit Hilfe der vorliegenden Erfindung ist es möglich, Positionswerte der Roboterwelt, beispielsweise eine Position der Werkzeugspitze (TCP: Tool Center Point) mit Bewegungen der CNC- oder PLC-Welt zu mischen oder zu synchronisieren. Beispielsweise kann ein in kartesischen Koordinaten gegebener TCP eines Roboters mit allen zeitrelevanten Steuersignalen über den Motionmanager der CNC- oder der SoftSPS-Welt ohne Zeitverzögerungen im Takt der Interpolatoren zur Verfügung gestellt werden. Entsprechend ist es jedoch auch möglich, die Einzel- oder Mehrfachachsen-Signale der CNC-oder SPS-Welt dem Roboterinterpolator zur Verfügung zu stellen. Derartiges Mischen der verschiedenen Motionwelten führt zu einer erheblichen Vereinfachung der Anlagenprogrammierung, beispielsweise über die HMI-Welt.

Weiterhin ist eine Verändern der Interpolationstakte für alle Motionwelten in einem Zug möglich. Auf diese Weise können einige wenige Achsen mit genauer Bahnplanung und sehr kurzem Interpolationstakt gefahren oder durch Andocken weiterer Achsen der Interpolator bezüglich einer Bewegungsanforderung angepasst werden. Folgendes Szenario ist erfindungsgemäß möglich: Nach Anschluss z.B. mehrerer Sercos-Antriebe meldet sich der Antriebsregler eines bestimmten Antriebs über den speziellen Treiber durch den Zwischeninterpolator am Motionmanager an mit der Mitteilung, dass ein $125\mu s$-Takt als Taktung auf dem Antriebsbus über einen Antriebsstrang möglich ist. Nur der Motionmanager kennt die Gesamtanlage und kann durch eine State-Machine kontrollieren, ob die untere Zwischeninterpolationsschicht so umgestaltet werden kann, dass der genannte Takt über den Motionmanager und den entsprechenden Interpolator möglich ist oder nicht (Systemauslastung bei z.B. 100 Achsen).

Hierzu ist dem Motionmanager die Systemlast bekannt, so dass hier auch eine Automatisierung (Hochschalten der Zwischeninterpolatoren) realisierbar ist.

In diesem Zusammenhang ist auch ein An- und Abkoppeln bzw. eine Übergabe von Einzelachsen an einen anderen Motionkern möglich, z.B. aufgrund einer Verwendung von Ethercat. Dies bedeutet im Zuge einer automatisierten Umorganisation einer Analge oder im Fehlerfalle eine enorme Erleichterung für den Betreiber. Darüber hinaus ist bei Einsatz der erfindungsgemäßen Vorrichtung bzw. des erfindungsgemäßen Verfahren ein Ein- oder Aussynchronisieren, beispielsweise eine TCP- oder Werkzeug-Übergabe, innerhalb einer Anlage von einem Roboter in die CNC-Welt oder zu einem SPS-Bandvorschub einfach realisierbar.

Auch eine Bewegungssteuerung im Falle kooperierender Roboter und/oder Anlagen ist mit Hilfe des erfindungsgemäßen Verfahren bzw. der erfindungsgemäßen Vorrichtung möglich.

## Patentansprüche

1. Verfahren zum Betreiben zusammenarbeitender, auch unterschiedlicher Geräte, insbesondere einer Anlage, mit diese durch Steuerungsabläufe steuernden unterschiedlichen Steuerungen mit unterschiedlichen Steuerungstakten, **dadurch gekennzeichnet, dass** die Werte oder Befehle der unterschiedlichen Steuerungen auf Zwischentakte eines gemeinsamen Systemtakts ($t_{Tick}$) interpoliert werden und dass die Steuerungsabläufe in mindestens einer Synchronisationseinrichtung synchronisiert werden.

2. Verfahren nach Anspruch 1, **dadurch gekennzeichnet, dass** Funktionseinheiten der Anlage nach erfolgter Synchronisierung nach einer weiteren Interpolation mit Steuersignalen versorgt werden.

3. Verfahren nach Anspruch 1 oder 2, **dadurch gekennzeichnet, dass** die unterschiedlichen Steuerungstakte der unterschiedlichen Steuerungen gemäß einer Beziehung

$$IPO_i = n_i \cdot t_{Tick}, \quad n_i = 1,2,3,\ldots.$$

gewählt werden, wobei $t_{Tick}$ ein ganzzahliges Vielfaches eines Taktes einer zur Durchführung des Verfahrens verwendeten Hardware ist.

**4.** Verfahren nach einem der Ansprüche 1 bis 3, **dadurch gekennzeichnet, dass** die Interpolation auf einen gemeinsamen Systemtakt in einer gemeinsamen Interpolationseinrichtung für eine Steuerung erfolgt.

**5.** Verfahren nach einem der Ansprüche 1 bis 4, **dadurch gekennzeichnet, dass** Achsen der Geräte koordiniert werden.

**6.** Verfahren nach einem der Ansprüche 1 bis 5, **dadurch gekennzeichnet, dass** die Synchronisierung und/oder Koordinierung in Echtzeit durchgeführt wird.

**7.** Verfahren nach einem der Ansprüche 1 bis 6, **dadurch gekennzeichnet, dass** einer Koordinierungseinrichtung durch die Funktionseinheiten ein veränderter Systemtakt vorgeschlagen wird.

**8.** Verfahren nach Anspruch 7, **dadurch gekennzeichnet, dass** die Koordinierungseinrichtung den veränderten Systemtakt annimmt oder ablehnt.

**9.** Verfahren nach Anspruch 7 oder 8, **dadurch gekennzeichnet, dass** für den veränderten Systemtakt gilt:

$$t_{Tick}' = 1/n' \cdot t_{Tick}, \ n' = 1,2,3,....$$

**10.** Verfahren nach Anspruch 8 oder 9, **dadurch gekennzeichnet, dass** eine Anzahl von Funktionseinheiten nach erfolgter Taktänderung nach dem alten Systemtakt weiterbetrieben werden.

**11.** Verfahren nach einem der Ansprüche 1 bis 10, **dadurch gekennzeichnet, dass** jeweils eine Mehrzahl von Geräten eines bestimmten Gerätetyps betrieben wird.

**12.** Vorrichtung zum Betreiben zusammenarbeitender, auch unterschiedlicher Geräte, insbesondere einer Anlage, mit diese durch Steuerungsabläufe steuernden unterschiedlichen Steuerungen mit unterschiedlichen Steuerungstakten, **gekennzeichnet durch** mindestens eine gemeinsame Interpolationseinrichtung (5.3) für die Steuerungen (3.1, 3.2, 3.3) zum Interpolieren von Werten oder Befehlen (IPO$_i$) der unterschiedlichen Steuerungen (3.1, 3.2, 3.3) auf Zwischentakte (IPOi) eines gemeinsamen Systemtakts (t$_{Tick}$) und mindestens eine Synchronisationseinrichtung (5) zum Synchronisieren der Steuerungsabläufe.

**13.** Vorrichtung nach Anspruch 12, **gekennzeichnet durch** zumindest eine weitere Interpolationseinrichtung (5.5) zum Interpolieren von Steuersignalen für Funktionseinheiten (6.1a-g) der Geräte nach erfolgter Synchronisierung.

**14.** Vorrichtung nach Anspruch 12 oder 13, **gekennzeichnet durch** eine Koordinationseinrichtung (5) zum Koordinieren der Steuerungsabläufe.

**15.** Vorrichtung einem der Ansprüche 12 bis 14, **dadurch gekennzeichnet, dass** die Synchronisations- und/oder Koordinierungseinrichtung (5) echtzeitfähig sind.

**16.** Vorrichtung nach einem der Ansprüche 12 bis 15, **gekennzeichnet durch** eine nicht-echtzeitfähige Komponente (2.1) zum Verändern von Einstellungen der Synchronisations- und/oder Koordinierungseinrichtung (5).

**17.** Vorrichtung nach einem der Ansprüche 12 bis 16, **dadurch gekennzeichnet, dass** zumindest die Synchronisations- und/oder Koordinierungseinrichtung (5) und eine Anzahl von Steuerungen (3.1, 3.2, 3.3) als auf einer gemeinsamen Rechnereinheit (PC) ausführbare Programmeinrichtungen ausgebildet sind.

**18.** Vorrichtung nach einem der Ansprüche 12 bis 17, **dadurch gekennzeichnet, dass** weitere Geräte während des Betriebs anschließbar sind.

**19.** Vorrichtung nach einem der Ansprüche 12 bis 18, **dadurch gekennzeichnet, dass** die gemeinsame Interpolationseinrichtung (5.3) zum Interpolieren von Steuerungstakten der Form

$$IPO_i = n_i \cdot t_{Tick}, \; n_i = 1,2,3,\ldots.$$

ausgebildet ist, wobei $t_{Tick}$ ein ganzzahliges Vielfaches eines Taktes einer verwendeten Hardware ist.

**20.** Vorrichtung nach einem der Ansprüche 12 bis 19, **dadurch gekennzeichnet, dass** die Synchronisations- und/oder Koordinierungseinrichtung (5) zum Verändern des Systemtakts ($t_{Tick}$) auf Anfrage durch wenigstens eine Funktionseinheit (6.1a-g) ausgebildet ist, wobei für den veränderten Systemtakt ($t_{Tick}$') gilt:

$$t_{Tick}' = 1/n' \cdot t_{Tick}, \; n' = 1, \; 2, \; 3, \; \ldots.$$

**21.** Vorrichtung nach Anspruch 20, **dadurch gekennzeichnet, dass** die Synchronisations- und/oder Koordinierungseinrichtung (5) eine Bestimmungseinrichtung (2.6) zum Bestimmen einer Belastung des Systems aufweist, deren Ergebnis für die Veränderung des Systemtakts ($t_{Tick}$) maßgeblich ist.

**Claims**

**1.** Method for operating cooperating, differing devices, particularly of a plant with different controls controlling the same through control sequences with different control clocks, **characterized in that** the values or instructions of the different controls are interpolated on intermediate clocks of a common system clock ($t_{Tick}$) and that the control sequences are synchronized in at least one synchronizing device.

**2.** Method according to claim 1, **characterized in that** operational units of the plant are provided with control signals after synchronization following a further interpolation.

**3.** Method according to claim 1 or 2, **characterized in that** the different control clocks of the different controls are selected according to a relationship

$$IPO_i = n_i \bullet t_{Tick}, \; n_i = 1,2,3,\ldots.$$

in which $t_{Tick}$ is an integral multiple of a clock of hardware used for performing the method.

**4.** Method according to one of the claims 1 to 3, **characterized in that** the interpolation takes place on a common system clock in a common interpolating device for a control.

**5.** Method according to one of the claims 1 to 4, **characterized in that** the axes of the devices are coordinated.

**6.** Method according to one of the claims 1 to 5, **characterized in that** synchronization and/or coordination is performed in real time.

**7.** Method according to one of the claims 1 to 6, **characterized in that** through the operational units a modified system clock is proposed to a coordinating device.

**8.** Method according to claim 7, **characterized in that** the coordinating device accepts or refuses the modified system clock.

**9.** Method according to claim 7 or 8, **characterized in that** for the modified system clock the following applies:

$$t_{Tick}' = 1/n' \bullet t_{Tick}, \; n' = 1,2,3,\ldots.$$

10. Method according to claim 8 or 9, **characterized in that**, following the clock change, a plurality of functional units continue to be operated according to the old system clock.

11. Method according to one of the claims 1 to 10, **characterized in that** in each case a plurality of devices of a specific device type is operated.

12. Apparatus for operating cooperating, differing devices, particularly of a plant, with different controls controlling the same through control sequences with different control clocks, **characterized by** at least one common interpolating device (5.3) for the controls (3.1, 3.2, 3.3) for interpolating the values or instructions ($IPO_i$) of the different controls (3.1, 3.2, 3.3) on intermediate clocks ($IPO_i$) of common system clock ($t_{Tick}$) and at least one synchronizing device (5) for synchronizing the control sequences.

13. Apparatus according to claim 12, **characterized by** at least one further interpolating device (5.5) for interpolating control signals for operational units (6.1 a-g) of the devices following synchronization.

14. Apparatus according to claim 12 or 13, **characterized by** a coordinating device (5) for coordinating the control sequences.

15. Apparatus according to one of the claims 12 to 14, **characterized in that** the synchronizing and/or coordinating devices (5) are real timable.

16. Apparatus according to one of the claims 12 to 15, **characterized by** a non-real timable component (2.1) for modifying the settings of the synchronizing and/or coordinating device (5).

17. Apparatus according to claims 12 to 16, **characterized in that** at least the synchronizing and/or coordinating device (5) and a plurality of controls (3.1, 3.2, 3.3) are constructed as programming devices implementable on a common computer unit (PC).

18. Apparatus according to one of the claims 12 to 17, **characterized in that** further devices can be connected during operation.

19. Apparatus according to one of the claims 12 to 18, **characterized in that** the common interpolating device (5.3) is constructed for the interpolation of control clocks in the form

$$IPO_i = n_i \bullet t_{Tick}, \ n_i = 1,2,3,...$$

in which $t_{Tick}$ is an integral multiple of a clock of hardware used.

20. Apparatus according to one of the claims 12 to 19, **characterized in that** the synchronizing and/or coordinating device (5) is constructed for modifying the system clock ($t_{Tick}$) on request by at least one operational unit (6.1 a-g) and for the modified system clock ($t_{Tick}'$) the following applies:

$$t_{Tick}' = 1/n' \bullet t_{Tick}, \ n' = 1,2,3,...$$

21. Apparatus according to claim 20, **characterized in that** the synchronizing and/or coordinating device (5) has an evaluating device (2.6) for evaluating the system load and its result is vital for the modification of the system clock ($t_{Tick}$).

**Revendications**

1. Procédé pour exploiter différents appareils travaillant conjointement, notamment une installation, avec différents automatismes commandant ladite installation par des séquences d'exécution des instructions avec différents cycles de commande, **caractérisé en ce que** les valeurs ou les instructions des différents automatismes sont interpolés sur des cycles intermédiaires d'un cycle système commun ($t_{Tick}$) et **en ce que** les séquences d'exécution sont synchronisées dans au moins un dispositif de synchronisation.

2. Procédé selon la revendication 1, **caractérisé en ce que** les ensembles fonctionnels de l'installation sont alimentés par des signaux de commande une fois la synchronisation effectuée, selon une deuxième interpolation.

3. Procédé selon les revendications 1 ou 2, **caractérisé en ce que** les différents cycles de commande des différents automatismes sont choisis suivant l'équation

$$IPO_i = n_i \cdot t_{Tick}, \ n_i = 1,2,3,\ldots$$

$t_{Tick}$ étant un coefficient entier d'un cycle d'un matériel utilisé pour exécuter le procédé.

4. Procédé selon une des revendications 1 à 3 **caractérisé en ce que** l'interpolation ait lieu dans un dispositif d'interpolation commun pour un automatisme sur un cycle système commun.

5. Procédé selon une des revendications 1 à 4, **caractérisé en ce que** les axes des appareils sont coordonnés.

6. Procédé selon une des revendications 1 à 5 **caractérisé en ce que** la synchronisation et/ou la coordination sont effectuées en temps réel.

7. Procédé selon une des revendications 1 à 6, **caractérisé en ce qu'**un cycle système modifié est proposé à un dispositif de coordination par les ensembles fonctionnels.

8. Procédé selon la revendication 7 **caractérisé en ce que** le dispositif de coordination accepte ou refuse le cycle système modifié.

9. Procédé selon les revendications 7 ou 8, **caractérisé par** la formule suivante s'appliquant au cycle modifié :

$$t_{Tick}' = 1/n' \cdot t_{Tick}, \ n' = 1,2,3,\ldots$$

10. Procédé selon la revendication 8 ou 9, **caractérisé en ce qu'**un nombre d'ensembles fonctionnels sont exploités suivant l'ancien cycle système une fois le cycle modifié.

11. Procédé selon une des revendications 1 à 10 **caractérisé en ce qu'**une majorité d'appareils d'un même type sont exploités.

12. Dispositif pour exploiter différents appareils travaillant conjointement, notamment une installation, avec différents automatismes commandant ladite installation par des séquences d'exécution des instructions avec différents cycles de commande, **caractérisé par** au moins un dispositif d'interpolation commun (5.3) pour les automatismes {3.1, 3.2, 3.3) afin d'interpoler les valeurs ou les instructions ($IPO_i$) des différents automatismes (3.1, 3.2, 3.3) sur des cycles intermédiaires (IPOi) d'un cycle système commun ($t_{Tick}$) et par au moins un dispositif de synchronisation (5) afin de synchroniser les séquences de commande.

13. Dispositif selon la revendication 12, **caractérisé par** au moins un deuxième dispositif d'interpolation (5.5) afin d'interpoler les signaux de commande pour les ensembles fonctionnels (6.1a-g) des appareils une fois la synchronisation effectuée.

14. Dispositif selon les revendications 12 ou 13, **caractérisé par** un dispositif de coordination (5) afin de coordonner les séquences de commande.

**15.** Dispositif selon un des revendications 12 à 14, **caractérisé en ce que** les dispositifs de synchronisation et/ou de coordination (5) sont compatibles en temps réel.

**16.** Dispositif selon une des revendications 12 à 15, **caractérisé par** une composante (2.1) non compatible en temps réel afin de modifier les réglages des dispositifs de synchronisation et/ou de coordination (5).

**17.** Dispositif selon une des revendications 12 à 16, **caractérisé en ce qu'**au moins le dispositif de synchronisation et/ou le dispositif de coordination (5) et un certain nombre d'automatismes {3.1, 3.2, 3.3) sont formés comme dispositifs de programmes exécutables sur un ordinateur (PC) commun.

**18.** Dispositif selon une des revendications 12 à 17, **caractérisé en ce que** d'autres appareils peuvent être connectés durant l'exploitation.

**19.** Dispositif selon une des revendications 12 à 18, **caractérisé en ce que** le dispositif d'interpolation commun (5.3) est formé pour interpoler des cycles de commande suivant la formule

$$IPO_i = n_i \cdot t_{Tick}, \ n_i = 1, 2, 3, \ldots$$

$t_{Tick}$ étant un multiple entier d'un cycle d'un matériel employé.

**20.** Dispositif selon une des revendications 12 à 15, **caractérisé en ce que** le dispositif de synchronisation et/ou de coordination (5) est formé pour modifier le cycle système ($t_{Tick}$) sur appel par au moins un ensemble fonctionnel (6.1a-g), étant entendu qu'on ait pour le cycle système modifié ($t_{Tick}'$)

$$t_{Tick}' = 1/n' \cdot t_{Tick}, \ n' = 1, 2, 3, \ldots$$

**21.** Dispositif selon la revendication 20, **caractérisé en ce que** le dispositif de synchronisation et/ou de coordination (5) présente un dispositif (2.6) afin de définir une charge du système, dont le résultat est déterminant pour la modification du cycle système ($t_{Tick}$).

**Fig. 1**

**Fig. 2**

**Fig. 3a**

**Fig.3b**

**Fig. 4**

**EP 1 692 579 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0507955 A1
- EP 1052560 A1